# EUROPEAN PATENT APPLICATION

(11) **EP 4 573 993 A1**
(43) Date of publication of application: **25.06.2025**
(21) Application number: 23219833.3
(22) Date of filing: 22.12.2023
(51) Int. Cl.: A47J 43/044, A47J 43/07

(54) **CONTAINER DEVICE FOR A KITCHEN APPLIANCE**

(71) Applicant: BSH Hausgeräte GmbH, 81739 München (DE)
(72) Inventor: Veber, Matic, 3331 Nazarje (SI); Sedovsek, Aleksander, 3331 Nazarje (SI)

(57) **Abstract**

A container device (1) for a kitchen appliance for processing food comprising:
- a lid (2),
- a container (3),
- a processing tool (4),
- a supporting plug (5),
wherein the processing tool (4) is rotatably mounted on the supporting plug (5), characterised in that the supporting plug (5) is configured to be releasably attachable to the container (3).

## Description

### Background of the invention

The present invention relates to a container device for a kitchen appliance for processing food and a kitchen appliance comprising such a container device.

### State of the Art

Container devices for kitchen appliances for processing food are known in the art. They are usually used with small kitchen appliances for processing food such as hand blenders, hand mixers, choppers, liquidizers, compact food processors and the like. These appliances are mainly hand-held and are then employed as drive means (drive units) for driving the working tool of the container devices and are attachable on the top of their containers, namely on their lids. Hence, in these containers (bowls) working tools are driven from above and arranged on bearing plugs (pins) on their bottom where they can rotate. As the bowls are manufactured by injection moulding, the bearing plugs are usually integrated in the bottom of the containers, in other words they are made in one piece with the containers. That being said, the material of the plug is the same as the material of the bowl. These materials specifically don't have good sliding properties. Therefore, as the working tool in the form of a knife with blades rotates on the plug a lot of heat is generated so that both can even melt and weld to each other which leads to a permanent damage.

There are solutions on the market which include bowls made of two or more parts. In this case, the metal plug is moulded into the plastic bowl. Manufacturing of such bowls is extremely expensive. Moreover, the plug is permanently integrated into the bowl. After a while the plug can wear out. As the metal plug is integrated, the whole bowl has to be replaced which is inconvenient in terms of costs and sustainability.

Therefore, there is a need for a solution that would comprise a replaceable plug. Moreover, the working tool should rotate on the plug as smoothly as possible. That being said, the plug should be made of a material with good sliding characteristics.

### Problem to be solved

It is an object of the present invention to improve functionality and usability of a container device for a kitchen appliance and increase its service life. At the same time repairability and sustainability should also be improved.

### Solution according to the invention

The object is achieved by a container device according to the features of claim 1. Advantageous embodiments that can be implemented by themselves or in combination are described in dependent claims.

The invention relates to a container device for a kitchen appliance for processing food comprising:
- a lid,
- a container,
- a processing tool,
- a supporting plug,
wherein the processing tool is rotatably mounted on the supporting plug, wherein the supporting plug is configured to be releasably attachable to the container.

The lid comprises a drive inlet to which a drive means can be attached. The drive means causes the processing tool to rotate via a coupling means. During operation the supporting plug is attached to the container and the processing tool slides in a rotatable manner on the supporting plug.

### Embodiments of the invention

Preferably, the supporting plug is configured to be attachable in a form-fitting manner and/or force-fitting manner. It is configured to be attachable by means of a threaded connection.

Advantageously, the threaded connection is formed as a modified buttress (sawtooth) thread. That being said, the threads of the supporting plug and the recess respectively comprise such a thread. This has the effect that stresses in the threaded connection are significantly reduced. So, the threaded connection is more durable and lasts longer.

According to one embodiment, the supporting plug comprises a collar. The collar has an annular (ring) shape. This ring is configured so that the processing tool slides on it in a rotating manner. Since the supporting plug is made of material with good sliding properties, its wear is significantly reduced.

In a preferred embodiment, the supporting plug can be blocked by a blocking means. The blocking means is formed by at least one blocking protrusion of the supporting plug and at least one blocking recess which is positioned on the bottom of the container. The effect is blocking of the supporting plug against unintended untightening and hence removing of the plug.

Preferebly, the blocking means are realized as three locking recesses and the corresponding blocking protrusions on the supporting plug.

According to one preferred embodiment, the supporting plug comprises manipulation means. The manipulations means are preferably configured as grooves adapted for positioning and fixing a special tool. This special tool is configured for tightening the supporting plug into the bottom of the container and untightening it. In this way the supporting plug is easily replaceable.

Advantageously, the container comprises a recess. The recess is positioned on the bottom, in the centre thereof. The internal wall of the recess is provided with a thread and forms part of a threaded connection.

In an advantageous solution, the supporting plug is preferably made of a plastic material (e.g. polymer) that is different from the material the container is made of and which has good sliding characteristics. Such materials are for instance polyoxymethylene (POM), polyamide (PA), polyether ether ketone (PEEK) and polybutylene terephthalate (PBT). Of course, all of these materials must have food grade properties in order to be used for food processing.

The supporting plug can also be made of food grade metal, preferably stainless steel. In this case it can be machined (by turning) or sintered.

Optionally, the supporting plug has a cylindrical to frustoconical shape. A lower part is cylindrical and extends longitudinally to an upper part of a substantially frustoconical shape. The supporting plug comprises an (internal) cavity so that it is hollow.

Specifically, the processing tool is preferably a cutting tool, i.e. a knife, provided with typically 2 or 4 blades. The processing tool can also be realized as a mixing/stirring tool or a kneading tool.

Preferably, the processing tool rotates counterclockwise. It slides on the collar of the supporting plug. As the thread of the supporting plug is left-handed, the processing tool tightens it into the recess of the container. Of course, when need be or if the tool rotates clockwise, the thread can also be adapted to be right-handed.

Specifically, the processing tool comprises a braking member which is arranged in its cavity. The braking member has a ring shape and is configured to slow down and stop rotation of the tool as fast as possible, when the lid is removed from the container of the container device. This represents a safety feature for preventing injuries and material damage.

A horizontal cross-section of the container can be circular. The inner wall of the container can be provided with flow breakers. The effect is a disruption (breakage) of the laminar flow of the foodstuff (i.e. introducing turbulence and swirling effect) during the processing operation. Such disruption improves the process and results in a more uniform mixing, blending or chopping of the food. Such modifications to the geometry of the container, namely flow breakers, include inward protrusions, such as ribs, ridges and the like.

In a vertical cross-section the container has a substantially frustoconical shape. According to one embodiment, the container is preferably made of a plastic material, in particular Tritan, which is food-grade and has good mechanical properties.

Terms such as "upper", "lower", "inner", "outer", "vertical", "horizontal" and the like indicate positions and orientations during the normal use and normal arranging of the parts of the container device.

A second aspect of the invention is a kitchen appliance comprising the container device according to claim 1 and the dependent claims.

### Brief description of the figures

Fig. 1 is a vertical cross-section of the container device
Fig. 2 is an isometric view of the container device with the container in a cross-section
Fig. 3 is an isometric detail view of the detail A of Fig. 2

### Detailed description

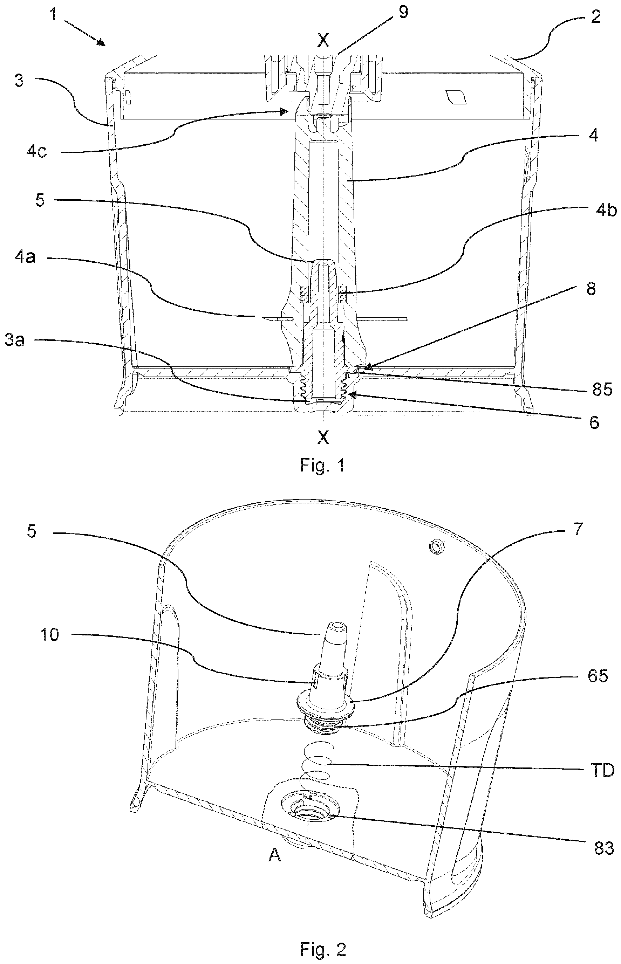

Fig. 1 depicts a container device 1 for a kitchen appliance for processing food according to one embodiment of the invention. A container 3 is covered by a lid 2. The lid 2 acccomodates a drive inlet 9 to which a drive means (not shown) can be attached. The drive means (e.g. drive unit of a hand-held blender or a hand mixer) comprising an electric motor causes a processing tool 4 to rotate via a coupling means 4c. The coupling means 4c comprises a coupler (not shown) which is part of the processing tool 4 and a counter-coupler (not shown) which is part of the drive inlet 9. The coupler and the counter-coupler are engaged, when the lid 2 is attached to the container 3. The processing tool 4 is rotatably mounted on the supporting plug 5. During use the supporting plug 5 is threaded into the container 3 by means of a threaded connection 6 and the processing tool 4 rotates (slides) on the supporting plug 5, more specifically on its collar 7. In a cavity of the processing tool 4 a braking member 4b is arranged. The braking member 4b has a ring shape and is configured to slow down and stop rotation of the processing tool 4 as fast as possible, when the lid 2 is removed from the container 3 of the container device 1.

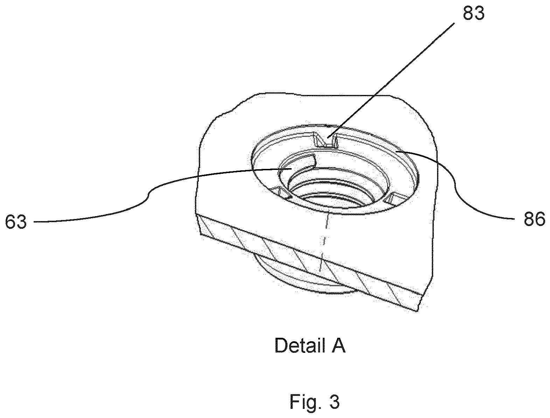

The supporting plug 5 can be blocked by a blocking means 8. The blocking means 8 is formed by at least one blocking protrusion 85 of the supporting plug 5 and at least one blocking recess 83 which is positioned on the bottom of the container 3. As shown in Fig. 3 (detail A of Fig. 2) the blocking recesses 83 are preferably three. The processing tool 4 rotates about the centre axis X-X in a counterclockwise direction. As the thread 63, 65 is left-handed, during rotation of the processing tool 4 the supporting plug 5 is tightened into the recess 3a (blind hole or blind bore) of the container 3. The blocking recesses 83 and the blocking protrusions 85 prevent the supporting plug 5 from untightening (in a clockwise direction) and removing from the bottom of the container 3.

The processing tool 4 is configured as a knife and comprises at least one blade 4a, preferably two blades.

Fig. 2 shows the container device 1 according to one embodiment of the invention. A curve TD shows a tightening direction of the supporting plug 5.

During normal use - when the supporting plug 5 is attached to the bottom of the container 3 - the collar 7 is substantially flush with the surface of the container bottom. The supporting plug 5 comprises manipulation means 10. The manipulations means 10 are preferably configured as substantially vertical grooves which are arranged equidistantly and adapted for positioning and fixing a special tool (not shown). This special tool is configured for tightening the supporting plug 5 to the bottom of the container 3 and for untightening the supporting plug 5. In this way a user is prevented from removing the supporting plug 5 without using a special tool.

An inner wall of the container 3 is provided with flow breakers.

Fig. 3 depicts the detail A of Fig. 2. The blocking recesses 83 are configured as wedge-shaped recesses. They are distributed in an equidistant manner on a periphery (circumference) of a depression 86 for receiving the collar 7. The thread 63 in the blind hole is left-handed.

As well as the thread 65 of the supporting plug 5, the thread 63 is a modified buttress (sawtooth) thread.

### Reference signs list

1 container device
2 lid
3 container
3a recess
4 processing tool
4a blade (of processing tool)
4b braking member
4c coupling means
5 supporting plug
6 threaded connection
63 thread (container)
65 thread (supporting plug)
7 collar
8 blocking means
83 blocking recess
85 blocking protrusion
86 depression
9 drive inlet
10 manipulation means
TD tightening direction
X-X centre axis

## Claims

1. A container device (1) for a kitchen appliance for processing food comprising:
- a lid (2),
- a container (3),
- a processing tool (4),
- a supporting plug (5),
wherein the processing tool (4) is rotatably mounted on the supporting plug (5), **characterised in that** the supporting plug (5) is configured to be releasably attachable to the container (3).

2. Container device (1) according to claim 1, **characterised in that** the supporting plug (5) is configured to be attachable in a form-fitting manner and/or force-fitting manner.

3. Container device (1) according to claim 1 or 2, **characterised in that** the supporting plug (5) is configured to be attachable by means of a threaded connection (6).

4. Container device (1) according to claim 3, **characterised in that** the threaded connection (6) is formed as a modified buttress thread.

5. Container device (1) according to any of the preceding claims, **characterised in that** the supporting plug (5) comprises a collar (7).

6. Container device (1) according to claim 5, **characterised in that** the processing tool (4) slides on the collar (7).

7. Container device (1) according to any of the preceding claims, **characterised in that** the supporting plug (5) can be blocked by a blocking means (8).

8. Container device (1) according to claim 7, **characterised in that** the blocking means (8) is formed by at least one blocking protrusion (85).

9. Container device (1) according to claims 7 or 8, **characterised in that** the blocking means (8) is formed by at least one blocking recess (83).

10. Container device (1) according to any of the preceding claims, **characterised in that** the supporting plug (5) comprises manipulation means (10).

11. Container device (1) according to any of the preceding claims, **characterised in that** the container (3) comprises a recess (3a).

12. Container device (1) according to any of the preceding claims, **characterised in that** the supporting plug (5) is made of polyoxymethylene (POM), polyamide (PA), polyether ether ketone (PEEK) or polybutylene terephthalate (PBT).

13. Container device (1) according to any of the preceding claims, **characterised in that** the container (3) is preferably made of a plastic material, in particular Tritan.

14. Container device (1) according to any of the preceding claims, **characterised in that** the processing tool (4) comprises a braking member (4b).

15. Kitchen appliance comprising the container device (1) according to any of the preceding claims.
